# EUROPEAN PATENT SPECIFICATION

(11) **EP 0 975 488 B1**
(45) Date of publication and mention of the grant of the patent: **30.10.2002**
(21) Application number: 98912811.1
(22) Date of filing: 06.04.1998
(51) Int. Cl.: B60R 1/04

(54) **INTERIOR REARVIEW MIRROR FOR A VEHICLE, AND ACTUATOR FOR AN INTERIOR REARVIEW MIRROR**
INNENRÜCKBLICKSPIEGEL FÜR FAHRZEUGE UND ANTRIEB FÜR EINEN INNENRÜCKBLICKSPIEGEL
RETROVISEUR INTERIEUR DE VEHICULE ET ACTIONNEUR DESTINE A CELUI-CI

(30) Priority: 15.04.1997 NL 1005817
(43) Date of publication of application: 02.02.2000
(73) Proprietor: IKU Holding Montfoort B.V., 3417 XJ Montfoort (NL)
(72) Inventor: BROUWER, Stefan, Frits, NL-2517 GZ Den Haag (NL)
(74) Representative: Ottevangers, Sietse Ulbe
(86) International application number: NL9800191
(87) International publication number: WO98046451

(56) References cited:
- EP-A- 0 287 181
- US-A- 2 664 785

## Description

The invention relates to preferably a rear view mirror for a vehicle such as a car, comprising an adjusting mechanism, the adjusting mechanism comprising:
- a support for attaching the rearview mirror to a vehicle;
- a mirror support plate for attaching a mirror plate thereto;
- a frame, to which the mirror support plate is attached;
Such a rearview mirror is known from EP-A-0 287181.

It is for instance known to provide the wing mirrors of a car with electrically operable actuators, enabling the position of the mirror blade to be electrically adjusted. However, up to the present, it has been conventional that the inside rearview mirror is adjusted manually. For the more expensive motorcars, however, there is an increasing need for the possibility to make parts that should be adjustable, such as mirrors, electrically adjustable, on account of the increased control convenience.

Another development in the field of increasing the control convenience of a motorcar is the provision of a memory possibility for the adjustable parts, such as seats and wing mirrors. Thus, if a car is alternately driven by different persons, it becomes possible to set, through a single push on a button, all those adjustable parts into the correct position for that person in question. There is a need for involving the wing mirror in that memory possibility as well. For this reason, too, there is a need for an electrically adjustable rearview mirror, i.e. a rearview mirror which can be adjusted by means of one (or several) electromotor(s).

As mentioned, electrically adjustable wing mirrors are already known. The wing mirror of a car generally has a construction of a shell-shaped housing and a mirror blade disposed in that housing, with that mirror blade being movable relative to that housing. An electrically operable actuator is mounted in that housing, and operates the adjustment of the orientation of the mirror blade.

For several reasons, such a construction cannot be used for constructing a rearview mirror so as to be electrically operable. To a rearview mirror it applies that the mirror blade should be movable together with the housing, enabling a user to adjust the mirror manually by changing the orientation of the housing.

In addition, a rearview mirror has more freedom of adjustment than a wing mirror. In a wing mirror, the mirror blade needs to be adjustable in two directions only: a horizontal adjustment about a substantially vertically directed axis of rotation, and a vertical adjustment about a substantially horizontally directed axis of rotation, which horizontally directed axis of rotation is substantially perpendicular to the longitudinal direction of the car. Furthermore, for the housing of a rearview mirror, it is desired that it can also be rotated about a substantially horizontally directed axis of rotation which is substantially parallel to the longitudinal direction of the car; in fact, this last movement need not be electrically operable.

Another important point of different concerns the manner of attaching the mirror to the vehicle. In the case of a wing mirror, the housing can in principle be rigidly mounted on the body of the car; usually, however, the housing is pivotally mounted on a base that is rigidly mounted on the body of the car, the pivot axis being substantially vertically directed. In the case of a rearview mirror, the housing is movably mounted on a substantially bar-shaped or differently designed support that is fixedly mounted on the inside of the body of the car. However, the orientation of that support relative to the mirror housing can be different for different types of cars: in some cars, the support is attached to the roof and hence oriented virtually vertically, while in other types of cars, the support is attached to the windscreen and hence oriented virtually horizontally. Intermediate forms are also possible.

Of course, it is possible to design different constructions for such different types, but that renders the separate constructions relatively expensive. For that reason, it is desired to provide a construction for a rearview mirror which is usable for al such different types.

Another object of the invention relates to a rearview mirror comprising detectors that can detect the position of the mirror blade. Such detectors can be useful for different reasons. In the first place, one may think of the above-mentioned memory possibility: to enable a set position of the mirror to be stored in a memory, and a control member to be able to adjust the rearview mirror from the present position into a position stored in that memory, the presence of position detectors as mentioned is required, which detectors provide an electric signal to the control member representative of the momentary position of the mirror.

In the second place, one may think of the rearview mirror as detector for the position of the driver's head. A properly adjusted rearview mirror provides the driver with a good rearward view, through the rear window. For that purpose, the driver will have to adapt the position of the rearview mirror to his position in the car, more in particular to the position of his eyes in the car. This implies that the position of the rearview mirror is indicative of the position of the eyes, and hence of the head, of the driver. The signals provided by the above-mentioned position detectors can hence be utilized by a control member for the automatic adjustment of parts in the vehicle whose setting depends on the position of the driver's head, for instance the automatic adjustment of a head rest. Thus, neck injury can be prevented, which could otherwise be caused in the event of a collision in combination with a head rest that is set too low (or too high).

Another possible application in this connection concerns for instance side-airbags intended for protecting the driver's head in the event of lateral collisions. The manner in which such airbags are inflated for receiving the head as efficiently and safely as possible may depend on the position of the driver's head; in this case, too, efficient use can be made of the signals provided by the above-mentioned position detectors.

For all applications mentioned, it is desired that a position detector provides optimally accurate signals with regard to the position of the mirror blade. Further, it is desired that signals can be provided with regard to two mutually independent adjusting directions (vertical and horizontal), and that the relevant signals for adjustment in one direction are optimally independent of adjustment in the other direction.

It is an object of the invention to provide a construction for a rearview mirror for vehicles which meets the above-described requirements. More in particular, it is an object of the present invention to provide a construction for a rearview mirror that is efficient, inter alia from a viewpoint of costs, and that readily lends itself for being combined with electric adjustment and/or position detectors.

It is a further object of the present invention to provide an electrically adjustable rearview mirror capable of exerting a relatively great electric force.

It is a further object of the present invention to provide an electrically adjustable rearview mirror having a highly compact construction, i.e. the dimensions are relatively small.

More in particular, it is an object of the present invention to provide an electrically adjustable rearview mirror wherein all the above objects are realized in one and the same construction.

To that end, the rearview mirror and the adjusting mechanism of such a rearview mirror according to the invention have the features as described in claims 1 and 27.

Further embodiments of the invention are referred to in the dependent claims 2 to 26.

These and other aspects, features and advantages of the present invention will be clarified by the following description of a preferred embodiment of a rearview mirror according to the invention, with reference to the accompanying drawings, wherein:
Figs. 1A-1D schematically illustrate the adjusting possibilities of a rearview mirror;
Fig. 2 is a schematic block diagram illustrating the mutual relation and freedom of relative movements of the parts of the rearview mirror;
Fig. 3 is a perspective rear view of a cutaway rearview mirror, wherein some parts have been left out;
Figs. 4A-4B show, in more detail, a construction for the dimming possibility;
Fig. 5 is a disassembled perspective view of some important parts of the rearview mirror;
Figs. 6A and 6B are perspective views of some of the parts shown in Fig. 5 in mounted condition;
Fig. 7 is a view comparable with Fig. 3, wherein motors are shown as well;
Fig. 8 schematically illustrates the motor drive of the adjusting possibilities;
Fig. 9A schematically shows a front view of a printed circuit board to illustrate sliding contacts;
Fig. 9B schematically shows a section taken on the line B-B in Fig. 9A;
Fig. 9C schematically shows a perspective view of the connection between a gear segment and a sliding contact.

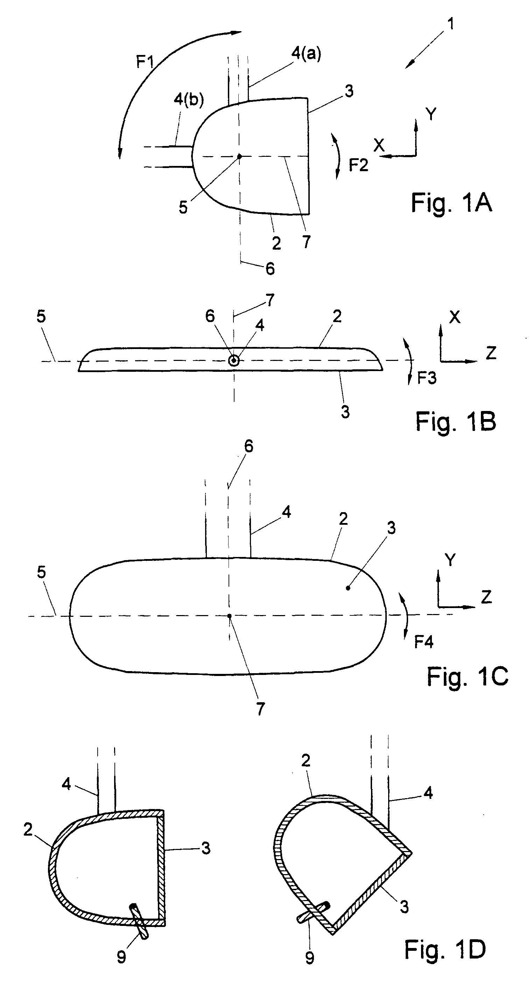

Presently, with reference to Figs. 1A-1D, the different adjusting possibilities of a preferred embodiment of a rearview mirror according to the present invention will be described.

Fig. 1A schematically shows a side elevation of a rearview mirror 1 for a car, not shown for the sake of simplicity. The rearview mirror 1 comprises a housing 2 surrounding an adjusting mechanism to be described hereinafter, and a mirror plate 3. The rearview mirror 1 further comprises a support 4 for mounting the rearview mirror 1 on a part of a vehicle.

Presently, for the present discussion, two rectangular coordinate systems will first be defined. A first coordinate system is associated with the vehicle to which the rearview mirror is to be attached, and has mutually perpendicular axes X_{w}, Y_{w} and Z_{w}, as follows. The X_{w}-axis is defined as the longitudinal direction (or driving direction) of that vehicle; the Y_{w}-axis is vertically defined; and the Z_{w}-axis is defined as the transverse direction of the vehicle, i.e. horizontal, perpendicular to the longitudinal direction. As second coordinate system is associated with the rearview mirror itself, and has mutually perpendicular axes X, Y, and Z, as follows. The X-axis is defined perpendicularly to the surface of the mirror plate 3; generally, the X-axis will therefore substantially correspond to the X_{w}-axis of the car. The Y-axis is defined in the plane of the mirror plate 3, and is vertically directed. The Z-axis is defined in the plane of the mirror plate 3, and is horizontally directed.

The support 4 can be vertically directed, as indicated at (a), for attaching the rearview mirror 1 to the roof of a car. However, the support 4 can also be horizontally directed, as indicated at (b), for attaching the rearview mirror 1 to the windscreen of a car. Intermediate variants are possible as well, with the support 4 hence pointing obliquely upwards, in a direction between 0° and 90°, in the X_{w}Y_{w}-plane. The precise orientation of the support 4 relative to the housing 2 is determined during the assembly of the rearview mirror 1, and fixed to render the rearview mirror 1 suitable for use with a specific type of vehicle. This fixation can be undetachable, but it is also possible to use a detachable manner of fixing. Within the framework of the present invention, it is important that during the assembly, the support 4 is pivotable relative to the housing 2 about an axis 5, which, when mounted in a car, will be aligned with the Z_{w}-axis.

It is observed that after the assembly, when the rearview mirror 1 has been mounted in a car, the above-mentioned freedom of movement, indicated in Fig. 1A by F1, is no longer present.

After mounting in a car, the support 4 is fixed relative to that car. For that reason, hereinafter, the support 4 will be considered to form part of the "firm world", and the orientation and movement of the housing 2 will be discussed relative to that support 4, it being assumed that the support 4 is vertically directed, i.e. that it has the orientation 4(a). However, it will be understood that the invention does not merely relate to a rearview mirror mounted in a car, but also to a rearview mirror that has not yet been mounted in a car.

After completion of the assembly (and, possibly, the mounting thereof in a car), the housing 2 has a first vertical adjusting freedom relative to the support 4, which first adjusting freedom is indicated in Fig. 1A by F2, wherein it is possible to rotate the housing 2 with the mirror plate 3 about the Z-axis. The angular range through which the housing 2 can be adjusted relative to the Z-axis has a predetermined value which is independent of the orientation of the support 4. The vertical adjustment of the housing 2 with the mirror plate 3 can be effected by exerting an external (manual) force on the housing 2, but according to an important aspect of the present invention, the vertical adjustment of the housing 2 with the mirror plate 3 can also be effected electrically, as will be explained more extensively hereinafter.

Fig. 1B schematically shows a top plan view of the rearview mirror 1. The housing 2 with the mirror plate 3 has a second horizontal adjusting freedom relative to the support 4, which second adjusting freedom is indicated in Fig. 1B by F3, wherein it is possible to rotate the housing 2 about the Y-axis (6). The angular range through which the housing 2 can be adjusted relative to the Y-axis has a predetermined value which is independent of the orientation of the support 4. The horizontal adjustment of the housing 2 with the mirror plate 3 can be effected by exerting an external (manual) force on the housing 2, but according to an important aspect of the present invention, the horizontal adjustment of the housing 2 with the mirror plate 3 can also be effected electrically, as will be explained more extensively hereinafter.

Fig. 1C shows a front view of the rearview mirror 1, viewed from the point of sight of a user, i.e. a driver of a car. To enable the driver to give the mirror housing 2 a particular oblique position relative to the horizontal, the housing 2 with the mirror plate 3 has a third adjusting freedom relative to the support 4, which third adjusting freedom is indicated in Fig. 1C by F4, wherein it is possible to rotate the housing 2 about the X-axis (7). The angular range through which the housing 2 can be adjusted relative to the X-axis has a predetermined value which is independent of the orientation of the support 4. The F4-adjustment of the housing 2 with the mirror plate 3 can exclusively be effected by exerting an external (manual) force on the housing 2.

The above adjusting freedoms F2 and F3 serve to enable the driver to adjust the rearview mirror in respect of the position of the driver's eyes, in such a manner that from his driver position, the driver has a proper view through the rear window of the car. In this connection, particularly the length of the driver plays an important part: in the case of a long driver, the rearview mirror will generally have to be set higher (F2) and more backwards (F3) than in the case of a small driver. The adjusting freedom F4 is more a matter of personal taste: the driver can direct the lower edge of the mirror so as to be parallel to the edge of the image of the rear window.

Nowadays, it is usual that a rearview mirror has a normal operating position and a dimming position, as is illustrated in an exaggerated manner in Fig. 1D. This involves at least the mirror blade 3 being pivotable relative to the support 4, about a pivot axis (F5) that is directed parallel to the Z-axis. By means of a dimming lever 9 positioned at the lower side of the mirror housing 2, the mirror plate 3 can be positioned in either the normal operating position or the dimming position, as illustrated to the left and right respectively in Fig. 1D. As the dimming possibility in a rearview mirror is preferred, the construction of the rearview mirror 1 to be discussed in more detail hereinafter comprises that dimming possibility.

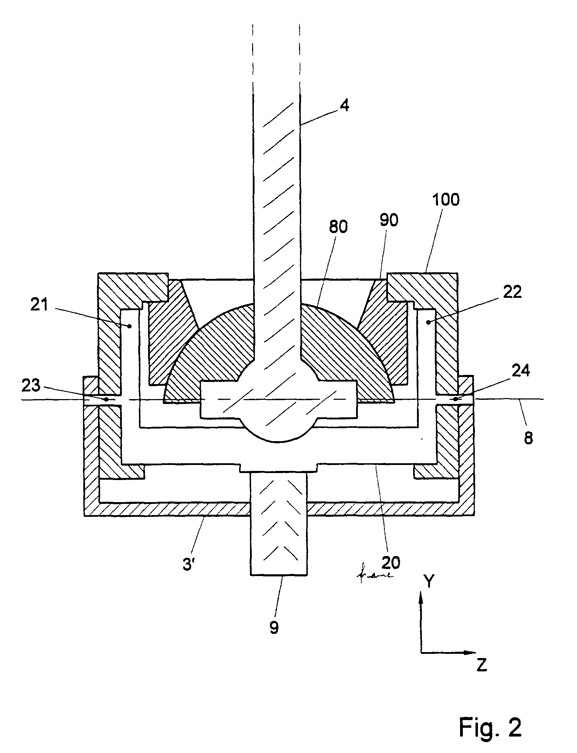

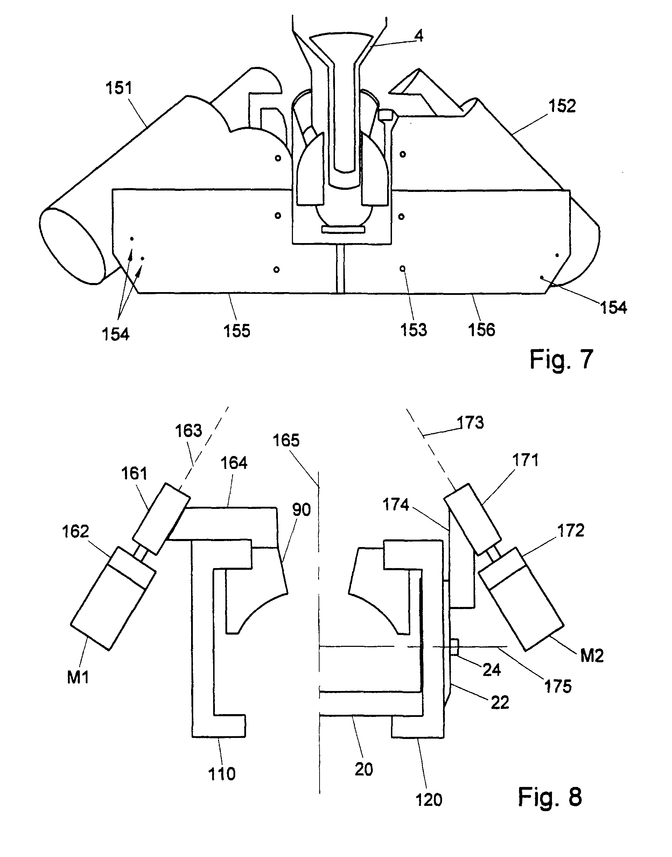

Hereinbelow, a description will first be given of the mechanical construction of the parts, movable relative to one another, of the inner work of a preferred embodiment of the rearview mirror 1 according to the present invention, with reference to Figs. 2-6; after that, with reference to Figs. 7-, a description will be given of the construction of the parts providing the electric operation. Hereinbelow, the rearview mirror 1 will be described in the mounted condition, and indications such as "vertical" will relate to that mounted condition.

Fig. 2 shows a block diagram of the construction of the adjusting mechanism for a rearview mirror 1 according to the present invention. By 20, a substantially U-shaped frame is indicated. The support 4 extends between the legs 21 and 22 of the frame 20. A first coupling member 80 couples the support 4 to the frame 20. A second coupling member 90 couples the first coupling member 80 to a frame support 100. The frame support 100 is coupled to the frame 20. The above couplings are so that:
a) the combination of the frame 20 and the frame support 100 can rotate about an axis directed in the Y-direction relative to the combination of the support 4, the first coupling member 80, and the second coupling member 90;
b) the combination of the frame 20, the frame support 100, and the second coupling member 90 can rotate about an axis directed in the X-direction relative to the combination of the support 4 and the first coupling member 80;
c) the combination of the frame 20, the frame support 100, the second coupling member 90 and the first coupling member 80 can rotate about an axis directed in the Z_{w}-direction relative to the support 4;
d) the frame 20 can rotate about an axis directed in the Z-direction relative to the combination of the frame support 100, the second coupling member 90 and the first coupling member 80.

As will be explained in more detail hereinafter, the freedom of movement, mentioned above under c), serves for setting the orientation of the support 4 relative to the rearview mirror 1 (see F1 in Fig. 1A). During the assembly, this orientation is set and fixed, so that, during use, the above-mentioned freedom of movement is absent.

To the frame support 100, one or several motors can be attached, as will be described in more detail hereinbelow.

Indicated by 3' is a mirror support plate, on which the mirror plate 3 proper (not shown) is mounted, for instance through gluing. Also mounted on the mirror support plate 3' is the housing 2, for instance through gluing. Relative to the frame 20, the mirror support plate 3' is pivotable about an axis 8 directed in the Z-direction, the pivoting action of the mirror support plate 3' relative to the frame 20 being operated by a dimming lever 9.

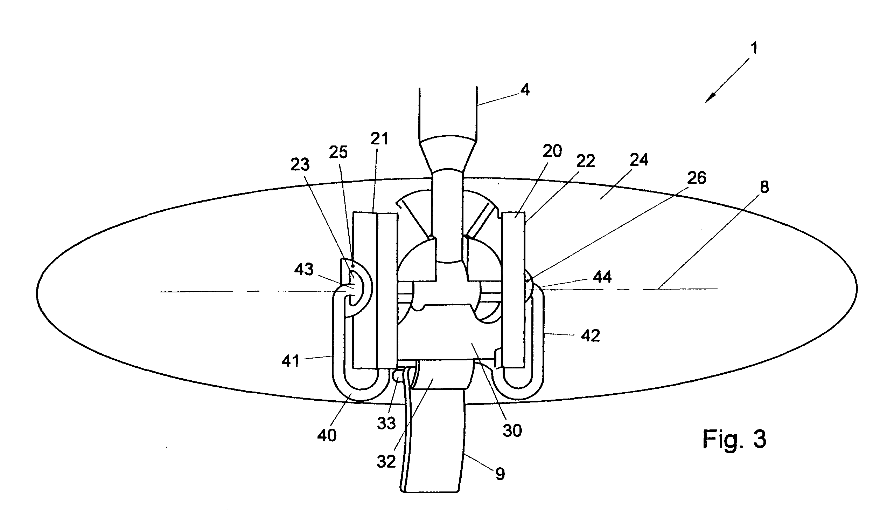

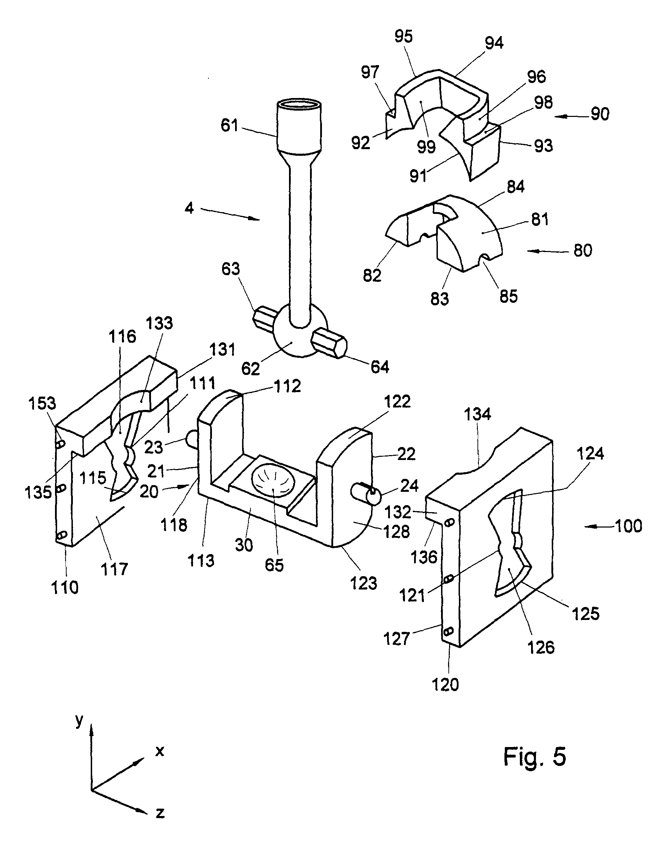

Fig. 3 schematically shows a perspective view of a part of the internal construction of the rearview mirror 1, viewed from the rear, wherein some parts are partly cutaway, and wherein some parts, such as the frame support 100 and the housing 2, are left out. Reference is also made to Fig. 5.

The frame 20 comprises two substantially vertically directed frame legs 21, 22, symmetrically located on either side of the center of the rearview mirror 1. Extending outwards from the frame legs 21, 22 of the frame 20 are pivot projections 23, 24 respectively. The pivot projections 23, 24 have a substantially circular-cylindrical contour, and their cylinder axes are in line. The mirror support plate 3' has its rear side provided with two hinge loops 25, 26 fitting around the pivot projections 23, 24. In this manner, the mirror support plate 3' with the mirror plate 3 and housing 2 attached thereto can pivot relative to the frame 20. The cylinder axes of the pivot projections 23, 24 thus define the above-mentioned pivot axis 8 for the dimming possibility.

The frame 20 has at its lower side a frame bottom 30 between the frame legs 21, 22. Formed in the lower side of the frame bottom 30 is a groove-shaped recess 31, having an at least partly cylindrical contour. The longitudinal direction of that recess 31 is directed parallel to the pivot axis 8.

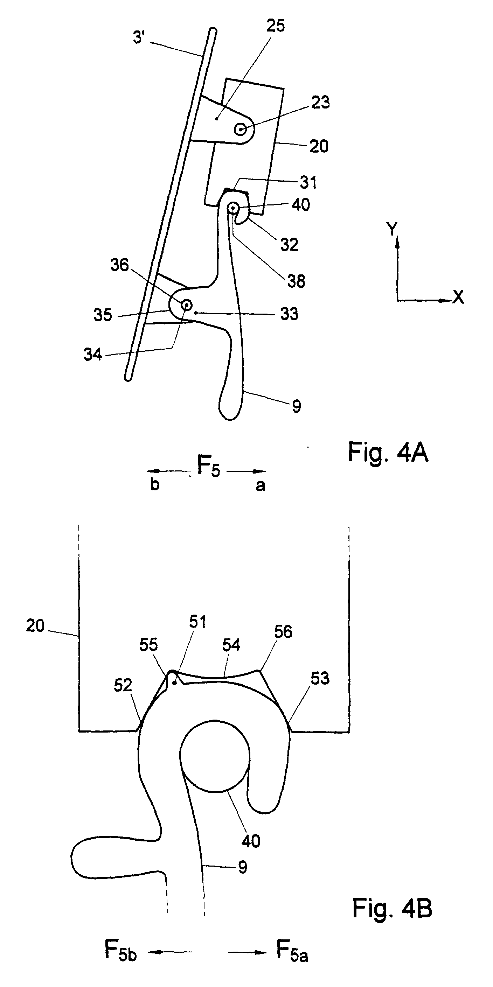

Fig. 4A shows a side elevation of the pivoting mechanism, to illustrate details regarding the dimming possibility. The dimming lever 9 has a hinge loop 32 and an arm 33. The hinge loop 32, which, in side elevation, substantially has the shape of a question mark in the embodiment shown, fits in the recess 31 of the frame 20 and is pressed upwards by a resilient member 40. In the example shown, the resilient member 40, hereinafter shortly referred to as "spring", is advantageously designed as a steel bar bent so as to be substantially U-shaped, while the spring legs 41, 42 of that U-shaped spring 40 are directed substantially parallel to the frame legs 21, 22, and the ends 43, 44 of those spring legs 41, 42 are bent inwards and engage suitably shaped recesses in the above-mentioned pivot projections 23, 24.

The arm 33 of the dimming lever 9 is coupled to the mirror support plate 3', while the mirror support plate 3' has a pivoting freedom about an axis 34 directed parallel to the axis 8, relative to the arm 33. For this purpose, the arm 33 can for instance be provided with an eye 35, as shown, in which a pin 36 formed on the mirror support plate 3' fits.

It will be understood that if the dimming lever 9 is moved forwards or backwards, as indicated by the arrows F5a and F5b in Fig. 4A, the dimming lever 9 pivots relative to the frame 20 about an axis 38 defined by the recess 31 of the frame 20 and the hinge loop 32, fitting therein, of the dimming lever 9. Accordingly, the arm 33 engaging the mirror support plate 3' will force that mirror support plate 3' to perform a pivoting movement relative to the frame 20 about the axis 8.

The pivoting freedom of the dimming lever 9 and hence the pivoting freedom of the mirror support plate 3' is limited by a suitably chosen profiling of the recess 31 of the frame 20 in combination with a suitably chosen profiling of the outside surface of the hinge loop 32 of the dimming lever 9. Fig. 4B shows a possible embodiment that can be realized in a relatively simple manner. In that embodiment, a projection 51 has been formed on the outside surface of the hinge loop 32 of the dimming lever 9. The recess 31 has two sidewalls 52, 53, which may be straight walls, and a bottom portion 54 which may be flat or convex. At the transition between the bottom portion 54 and a sidewall 52 or 53, the recess 31 has a concave transitional portion 55 or 56 respectively. Fig. 4B shows the dimming lever 9 in a position in which the projection 51 of the hinge loop 32 of the dimming lever 9 is located in the foremost transitional portion 55. This defines a hindmost extreme position of the dimming lever 9, because it is impossible to pivot the dimming lever 9 further backwards (according to the arrow F5a in Fig. 4B), as the projection 51 strikes the sidewall 52 of the recess 31, which sidewall serves as a stop.

However, the dimming lever 9 can be pivoted forwards (according to the arrow F5b in Fig. 4B). This involves the projection 51 moving over the bottom portion 54 of the recess 31, while the hinge loop 32 of the dimming lever 9 is pushed away from the bottom portion 54 of the recess 31, against the action of the spring 40. Although the spring 40 does allow such pivoting movement, the spring 40 opposes that pivoting movement, and if the dimming lever 9 were released, the spring 40 pushes the projection 51 back into the foremost transitional portion 55. When the dimming lever 9 is pivoted forwards through a sufficiently large distance, so that the projection 51 passes the center of the bottom portion 54 of the recess 31, the spring 40 cooperates in displacing the projection 51 to the hindmost transitional portion 56.

Thus, the dimming lever 9 has only two stable positions, which are also extreme positions: a first position in which the projection 51 is in the foremost transitional portion 55, and a second position in which the projection 51 is in the hindmost transitional portion 56. Those two positions correspond to a normal operating position and a dimming position of the mirror plate 3 and the housing 2 relative to the frame 20.

It will be understood that these extreme positions can also be defined in other manners.

In the foregoing, the dimming possibility of the rearview mirror has been discussed. It will be understood that the dimming possibility is independent of the position of the support 4 relative to the frame 20. Further, it will be understood that the mirror support plate 3', except for the dimming possibility discussed, is fixedly mounted on the frame 20; in fact, it is even possible that if the dimming possibility is dispensed with, the mirror support plate 3' is rigidly fixed relative to the frame 20. The same applies if the dimming of the mirror is provided in a different manner, for instance in that the rearview mirror comprises an electrochrome mirror. Hereinafter, the other movement possibilities of the rearview mirror will therefore be described by exclusively describing the movement of the frame 20 relative to the support 4, and the mirror support plate 3' and the housing 2 will be thought away: as explained hereinabove, the movement of the frame 20 is representative of the movement of the mirror support plate 3'.

Fig. 5 schematically shows a perspective view of the support 4, the frame 20, the first coupling member 80, the second coupling member 90, and the frame support 100, in disassembled condition.

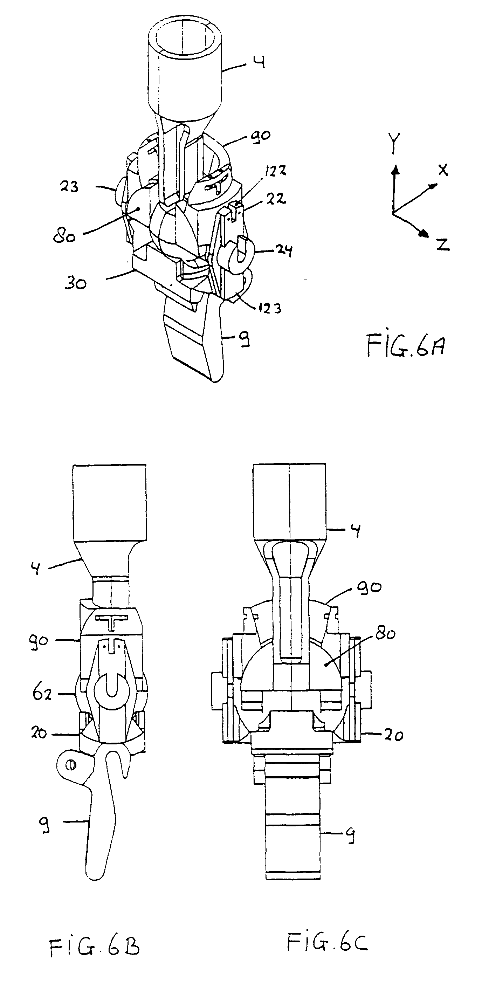

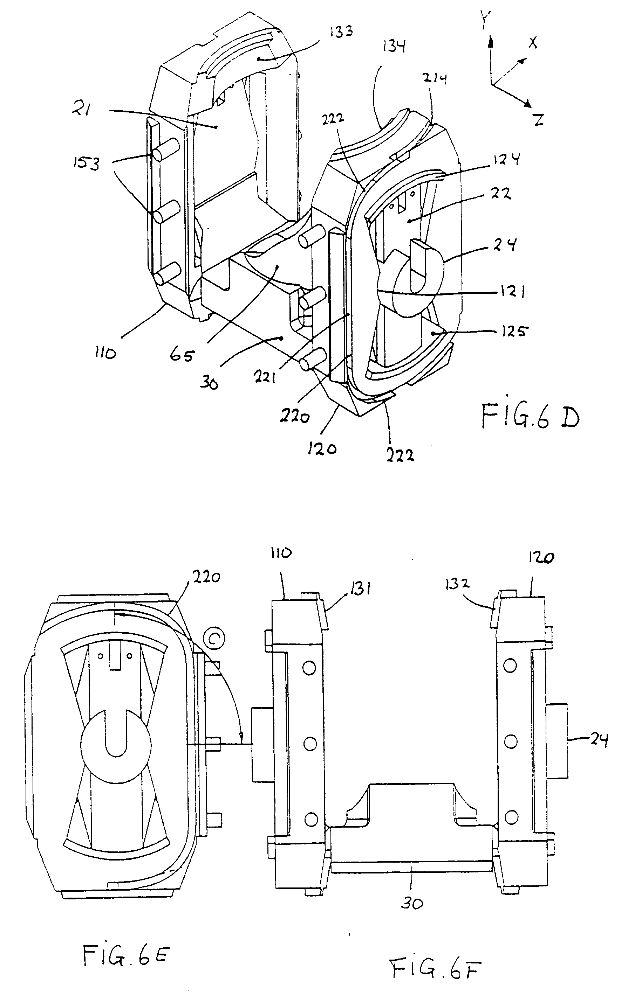

Fig. 6A shows a perspective view of the support 4, the frame 20, the first coupling member 80 and the second coupling member 90 in assembled condition, while the dimming lever 9 is shown as well. Fig. 6B shows these parts in side elevation (Z-direction), and Fig. 6C shows these parts in front view (X-direction).

Fig. 6D shows a perspective view of the frame 20 and the frame support 100 in assembled condition. Fig. 6E shows this combination in side elevation (Z-direction), and Fig. 6F shows this combination in front view (X-direction).

In general, the support 4 has the shape of an elongated bar, with a first end 61 for attaching the support 4 to the roof or the windscreen of a vehicle, and a second end 62 for attaching the support 4 to the rearview mirror 1. The design of the first end 61 is not critical, and will not be further discussed here.

The second end 62 of the support 4 generally has a spherical shape. Formed in the top side of the frame bottom 30 is a concave recess 65 having a negative spherical shape whose curvature corresponds to the curvature of spherical second end 62 of the support 4. The spherical second end 62 of the support 4 is positioned in that recess 65 to define a ball hinge between the frame 20 and the support 4. Hereinafter, the concave recess 65 of the frame bottom 30 will be referred to as "hinge socket", and the spherical second end 62 of the support will be referred to as "hinge ball".

Formed on the hinge ball 62 are two projecting pins 63, 64, which pins 63, 64 are in line, the longitudinal direction of those pins 63, 64 being substantially directed perpendicularly to the longitudinal direction of the support 4. The pins substantially have a cylindrical shape, while the cylinder face of each pin 63, 64 can have a predetermined, suitable profiling, for instance the shape of a polygon. The longitudinal direction of those pins 63, 64 defines the Z_{w}-axis, as will be explained hereinbelow.

The first coupling member 80 has a top face 81 which is curved according to a circular cylinder face. In top plan view, the first coupling member 80 substantially has a U-shape, with two legs 82 and 83 located symmetrically relative to the cylinder axis of this top face 81 and interconnected by a bridge piece 84. At the bottom side, profilings 85 have been provided in the legs 82 and 83, which correspond to the profilings of the pins 63 and 64 of the hinge ball 62. The U-shaped first coupling member 80 fits with its legs 82 and 83 on the top side of the hinge ball 62 like a collar, with the legs 82 and 83 being perpendicular to the Z_{w}-axis defined by the pins 63 and 64, and the profilings 85 of the legs 82 and 83 engaging the profilings of the pins 63 and 64.

During the assembly, the support 4 has a freedom of rotation about the Z_{w}-axis only, relative to the first coupling member 80. During the assembly, this freedom of rotation is used for setting the orientation of the support 4 with respect to the Z_{w}-axis (see F1 in Fig. 1A). After the assembly, the hinge ball 62 of the support 4 is confined between (at its bottom side) the hinge socket 65 and (at its top side) the collar-shaped first coupling member 80, with the profilings 85 of the legs 82 and 83 engaging the profilings of the pins 63 and 64 so as to fix the support 4 relative to the first coupling member 80. It is also possible that during the assembly procedure, the first coupling member 80 is secured in a predetermined position to the support 4, for instance through gluing or welding, or through a mechanical securing such as a screw (not shown). In this respect, it is important that in the assembled condition, the freedom of rotation F1 of the support 4 relative to the first coupling member 80 about the Z_{w}-axis is removed: in the assembled condition, the support 4 and the first coupling member 80 can be considered one whole.

In this connection, it is observed that within the framework of the present invention, the combination of the support 4 and the first coupling member 80 can be manufactured as a single, integrated part, in which case the above-mentioned profilings or other fixation means can of course be omitted, if one dispenses with the possibility of making different versions of the rearview mirror 1 while using the same parts, which different versions are distinguished from one another by the orientation of the support 4. Of course, in that case, it is in fact possible to make different versions of the rearview mirror 1 by making different versions of the above-mentioned integrated part (4+80); a possible manner of effecting this is an injection-molding technique, wherein the first coupling member 80 is injected around the hinge ball 62, and wherein the orientation of the support 4 in the injection mold determines the orientation of the support 4 in the rearview mirror to be eventually assembled.

The second coupling member 90 likewise has substantially a U-shape in top plan view, with two legs 92 and 93 interconnected by a bridge piece 94. The second coupling member 90 has a bottom face 91 curved according to a cylinder face and corresponding to the top face 81 of the first coupling member 80, and fits with its legs 92 and 93 on the first coupling member 80 like a collar. The cylinder axis of these cylinder faces 81, 91, intersects the center of the hinge ball 62, and is directed according to the X_{w}-axis, i.e. perpendicularly to the Z_{w}-axis.

The frame support 100 comprises two support rests 110 and 120, which may be of mirror-symmetrical or preferably even identical design. Each support rest 110, 120 is coupled to the frame 20, so that relative to each other, the frame 20 and the support rests 110, 120 exclusively have a freedom of rotation with respect to the Z-axis. In the embodiment shown, each support rest 110, 120 has a circular bearing part 111, 121, engaging a respective one of the projections 23, 24 of the frame 20. Further, the legs 21, 22 of the frame 20 have convex wall portions 112, 113 and 122, 123, curved according to a cylinder surface whose cylinder axis coincides with the axis of projections 23, 24, and the support rests 110, 120 have concave wall portions 114, 115 and 124, 125, curved according to the same cylinder surface. The concave wall portions 114, 115 and 124, 125 of the support rests 110, 120 engage the respective convex wall portions 112, 113 and 122, 123 of the frame 20 to form a rotation bearing, with the legs 21 and 22 being located in the recesses 116, 126 of the support rests 110, 120. The side edges of those recesses 116, 126 define stops for the legs 21 and 22 to limit the freedom of rotation within predetermined angular values. In a preferred embodiment, that freedom of rotation is about 30°.

In the Z-direction, the support rests 110, 120 are fixed relative to the frame 20 in that inwardly facing surface portions 117, 127 of the support rests 110, 120 abut against outwardly facing surface portions 118, 128 of the legs 21, 22 of the frame 20.

Each support rest 110, 120 is coupled to the second coupling member 90, so that relative to one another, the second coupling member 90 and the support rests 110, 120 exclusively have a freedom of rotation with respect to the Y-axis. In the embodiment shown, the legs 92, 93 of the second coupling member 90 have a stepped shape, whereby a neck portion 95, 96 and a shoulder portion 97, 98 are defined. The neck portion 95, 96 is curved convex according to a cylinder surface whose cylinder axis defines the Y-axis and intersects the center of the hinge ball 62. The shoulder portion 97, 98 is flat and perpendicular to the Y-axis. Each support rest 110, 120 comprises an upper edge portion 131, 132. The upper edge portion 131 of the support rest 110 engages the neck portion 95 and the shoulder portion 97 of the leg 92 of the second coupling member 90, and the upper edge portion 132 of the support rest 120 engages the neck portion 96 and the shoulder portion 98 of the leg 93 of the second coupling member 90. For that purpose, those upper edge portions 131 and 132 are inwardly directed, and have a concave wall portion 133, 134 curved according to a cylinder face corresponding to the cylinder shape of the neck portion 95, 96, while a bottom wall portion 135, 136 of those upper edge portions 131 and 132 is flat and perpendicular to the Y-axis.

Thus, the support rests 110 and 120 define a rotation bearing for the second coupling member 90 with respect to the Y-axis. The support rests 110 and 120 can comprise stops for the legs 92 and 93 of the second coupling member 90 to limit the freedom of rotation within predetermined angular values, for instance about 30°, but that is not shown in the Figures, for the sake of simplicity.

In the Y-direction, the frame 20 is fixed relative to the support rests 110, 120 in that the concave wall portions 114, 115 and 124, 125 of the support rests 110, 120 engage the convex wall portions 112, 113 and 122, 123 respectively of the frame 20. Further, the combination of the hinge ball 62, the first coupling member 80 and the second coupling member 90 is fixed in the Y-direction relative to the combination of the frame 20 and the support rests 110, 120, on the one hand because the hinge ball 62 rests in the hinge socket 65, and on the other because the bottom wall portions 135, 136 of the upper edge portions 131 and 132 of the support rests 110, 120 engage the shoulder portions 97, 98 of the second coupling member 90.

In this manner, the combination of the second coupling member 90, the frame support 100 and the frame 20 (with the mirror support plate 3' attached thereto) can perform a rotational movement about the X-axis (F4) relative to the combination of the hinge ball 62 and the first coupling member 80, with the hinge ball 62 shifting relative to the hinge socket 65 and the cylindrical top face 81 of the first coupling member 80 shifting relative to the cylindrical bottom face 91 of the second coupling member 90. In such a rotation relative to the X-axis, the orientations relative to the Y-axis and the Z-axis can remain fixed, i.e. no displacement takes place between the second coupling member 90 on the one hand and the frame support 100 on the other, and that no displacement takes place between the frame support 100 on the one hand and the frame 20 on the other.

However, within the framework of the present invention, it is also possible that the two coupling member 80 and 90 are rigidly interconnected, or manufactured as a single integrated part, in a version of the rearview mirror wherein the possibility of positioning the housing 2 with the mirror plate 3 oblique relative to the X-axis is dispensed with.

As the two coupling members 80 and 90 are U-shaped in top plan view, with the legs of that U-form pointing to the rear side of the rearview mirror, the elongated support 4, starting from the hinge socket 65, can adopt any position between vertical and horizontally backwards, i.e. a positioning freedom of 90° relative to the Z_{w}-axis.

The legs 92 and 93 of the second coupling member 90 have inside surfaces 99 which, in the YZ-plane, are positioned at an angle relative to each other to allow the movement of the elongated support 4 through an angular range of about 30°, upon rotation about the X-axis.

It will also be understood that the combination of the frame support 100 and the frame 20 (with the mirror support plate 3' attached thereto) can perform a rotational movement about the Y-axis (F3) relative to the combination of the hinge ball 62, the first coupling member 80, and the second coupling member 90, with the hinge ball 62 rotating relative to the hinge socket 65 and the cylindrical neck portion 95, 96 of the second coupling member 90 shifting relative to the concave wall portions 133, 134 of the upper edge portions 131, 132 of the support rests 110, 120. During such a rotation relative to the Y-axis, the orientations relative to the X-axis and the Z-axis can remain fixed, i.e. no displacement takes place between the first coupling member 80 on the one hand and the second coupling member 90 on the other, and no displacement takes place between the frame support 100 on the one hand and the frame 20 on the other.

It will also be understood that the frame 20 (with the mirror support plate 3' attached thereto) can perform a rotational movement about the Z-axis (F2) relative to the combination of the hinge ball 62, the first coupling member 80, the second coupling member 90, and the frame support 100, with the hinge ball 62 shifting relative to the hinge socket 65 and the convex wall portions 112, 113, and 122, 123 of the legs 21, 22 of the frame 20 shifting relative to the concave wall portions 114, 115 and 124, 125 of the support rests 110, 120. During such a rotation relative to the Z-axis, the orientations relative to the Y-axis and the X-axis can remain fixed, i.e. no displacement takes place between the second coupling member 90 on the one hand and the frame support 100 on the other, and no displacement takes place between the first coupling member 80 on the one hand and the second coupling member 90 on the other.

The adjusting possibilities described hereinabove can be utilized manually by exerting an external (hand) force on the housing 2, as will be readily understood by anyone skilled in the art. Hereinafter, it will be discussed that the adjusting possibilities F2 and F3 can also be remotely controlled through electric excitation of a motor.

Fig. 7 shows a rear view, comparable with Fig. 3, of the rearview mirror 1, wherein the housing 2 and the mirror support plate 3' are left out, but wherein a motor housing 150 is clearly visible. Fig. 8 shows a schematic section of the parts of the rearview mirror 1 that are relevant for the electric drive, and wherein in particular the motor housing 150 is left out.

The motor housing 150 can be an integral part, but advantageously comprises two individual motor housing parts 151 and 152, which are preferably mirror-symmetrical. In the preferred embodiment illustrated, a first motor housing part 151 is attached to the first support part 110, and a second motor housing part 152 is attached to the second support part 120. The manner of attachment can be any suitable manner of attachment. In the example shown, the support parts 110 and 120 comprise positioning pins 153, and the motor housing parts 151 and 153 comprise positioning holes that correspond to these positioning pins 153. After the motor housing parts 151 and 152 have been provided, the positioning pins 153 can be thermally deformed to secure the motor housing parts 151 and 152. Gluing or screwing can also be utilized.

Arranged in the first motor housing part 151 is a first electromotor M1, and arranged in the second motor housing part 152 is a second electromotor M2. The motors M1 and M2, preferably identical, comprise electric connecting pins 154 that project relative to the motor M1, M2 in transverse direction. The connecting pins 154 are substantially directed in the X-direction, and project outwards from the motor housing parts 151, 152. Mounted on each motor housing part 151, 152 is a printed circuit board 155, 156. The printed circuit boards 155 and 156 are preferably mirror-symmetrical, as shown. In the embodiment shown, the printed circuit boards 155, 156 are provided with positioning holes that cooperate with the above-mentioned positioning pins 153, so that, when the printed circuit boards 155, 156 are properly positioned relative to those positioning pins 153, a proper positioning of the printed circuit boards 155, 156 relative to the motor housing parts 151, 152 is automatically accomplished.

The printed circuit boards 155, 156 further comprise connecting points corresponding to the above-mentioned connecting pins 154 of the motors M1, M2. These connecting points, not separately illustrated for simplicity's sake, can be designed as clamping contacts, and are connected, via print tracks (not shown) on the printed circuit boards 155, 156, to connecting wires (not shown) for electrically connecting the motors M1, M2 to the electronic devices on board a car. For passing those connecting wires outwards, the support 4 is of hollow design, while in the sidewall of the support 4 there is at least provided an opening through which the connecting wires in the proximity of the hinge ball 62 can be lead to the interior of the support 4.

Fig. 7 clearly shows that the configuration of the housing parts 151 and 152 and of the printed circuit boards 155 and 156 is such that the F1-adjusting possibility of the support 4 is not obstructed thereby.

Each motor M1, M2 drives a pinion 161, 171, optionally via a suitable reduction system 162, 172, and preferably with the interposition of a slip coupling. As the nature and construction of the motors M1, M2 and of the reduction system 162, 172, if any, do not constitute a subject of the present invention, and a skilled person need not have knowledge thereof for a proper understanding of the present invention, they will not be further described. It suffices to observe that use can be made of motors and reduction systems known per se.

Similar observations are made with regard to the slip couplings. To this, it can be added that the slip couplings serve to allow the motors M1, M2 to keep running, upon continued excitation, when movement of the housing 2 is not possible, for instance because the rearview mirror 1 has reached an end position, and also to allow the rearview mirror 1 to be adjusted manually when motors are idle.

It is further observed that after the assembly, the motors M1 and M2 with the respective reduction systems 162, 172, the motor housing 150 and the frame support 100 form a whole. In this connection, it is preferred that the two printed circuit boards 155 and 156 be formed as an integral whole, i.e. as a single part, because that single printed circuit board part then connects the two support parts 110, 120 as a bridge piece and thus contributes to the constructional stiffness.

The first pinion 161 is bearing-mounted in the first housing part 151 so that its axis of rotation 163 is located in the YZ-plane, and makes an angle of preferably about 45° with the Y-axis. In the embodiment shown, the pinion 161 is mounted in line with the motor axis. The second coupling member 90 comprises a first gear segment 164 having teeth that engage with the first pinion 161 and having an axis of symmetry 165 that coincides with the Y-axis. The first gear segment 164 is rigidly connected to the second coupling member 90, for instance through gluing or through the fact that the first gear segment 164 is formed as an integral part of the second coupling member 90, but preferably, the first gear segment 164 is a separate part coupled, by means of a snap connection, to the second coupling member 90.

Preferably, the first gear segment 164 is a segment of a crown wheel. Crown wheels are known per se, and can be described as a conical wheel capable of cooperating with a pinion, i.e. an evolvent gear wheel, in such a manner that this pinion may be shifted along its longitudinal axis without this having a negative effect on the transmission. An important advantage of the use of a crown wheel is that the axial positioning and bearing of the pinion 161 is not critical, which keeps the building costs limited.

When the first motor M1 is excited, the first pinion 161 will start rotating in a direction determined by the direction of the drive current of the motor M1. As a result, the first gear segment 164 is forced to rotate about its axis of rotation 165 relative to the first motor housing part 151, and hence relative to the combination of the frame support 100 and the frame 20. During this rotation, the first gear segment 164 carries with it the second coupling member 90, and hence also the first coupling member 80 and the support 4. In practice, this means that the first motor M1 with the first motor housing part 151, the frame 20 and the housing 2 and the mirror support plate 3' attached thereto, and hence with the mirror 3, rotates about the Y-axis (F3) relative to the support 4.

The second pinion 171 is bearing-mounted in the second housing part 152 so that its axis of rotation 173 is located in the YZ-plane, and makes an angle of preferably about 45° with the Y-axis. The axes of rotation 163 and 173 thus make an angle of about 90° with each other. The second leg 22 of the frame 20 comprises a second gear segment 174 having teeth that engage with the second pinion 171, and having an axis of symmetry 175 that coincides with the Z-axis. Preferably, the second gear segment 174 is a segment of a crown wheel. The second gear segment 174 is rigidly connected to the frame 20, preferably through gluing or through the fact that the second gear segment 174 is formed as an integral part of the second leg 22, but preferably, the second gear segment 174 is a separate part, coupled to the second frame leg 22 by means of a snap connection.

When the second motor M2 is excited, the second pinion 171 will start rotating in a direction determined by the direction of the drive current of the motor M2. As a result, the second gear segment 174 is forced to rotate about its axis of rotation 175 relative to the second motor housing part 152, and hence relative to the frame support 100. During this rotation, the second gear segment 174 carries with it the frame 20, and hence also the housing 2 and the mirror support plate 3' attached thereto. In practice, this means that the frame 20, and the housing 2 and the mirror support plate 3' attached thereto, and hence with the mirror 3, rotates about the Z-axis (F2) relative to the combination of the support 4, the first coupling member 80, the second coupling member 90, the frame support 100, the second motor housing part 151, and the second motor M2.

Preferably, the radii of the gear segments 164, 174 are mutually identical.

It will be understood that the pinions 161 and 171 may also have a different orientation, and that the shape of the gear segments 164, 174 may be formed accordingly. However, an important advantage of the embodiment described is that the arrangement of the motors is symmetrical and can remain compact. In this connection, it is an advantage that the teeth of the gear segments 164, 174 make an angle of 45° with the axes of rotation Y, Z of those gear segments 164, 174, because this enables the gear segments 164, 174 to be of identical design.

As mentioned, there is a need for means that can generate an electric signal representative of the position of the mirror support plate 3, viz. the position of the mirror support plate 3 relative to the Y-axis and relative to the Z-axis. Such measuring means are useful in a rearview mirror comprising motors M1 and M2 for the electric adjustment, as described hereinabove, because a memory possibility for the mirror can then be realized. However, such measuring means are also already useful in a rearview mirror that does not comprise motors for electric adjustment, and that can hence only be adjusted manually, because a signal is then provided which is usable for the automatic setting of parts in a vehicle whose position or operation is to be adapted to the driver's stature, i.e. the position of his head in the vehicle.

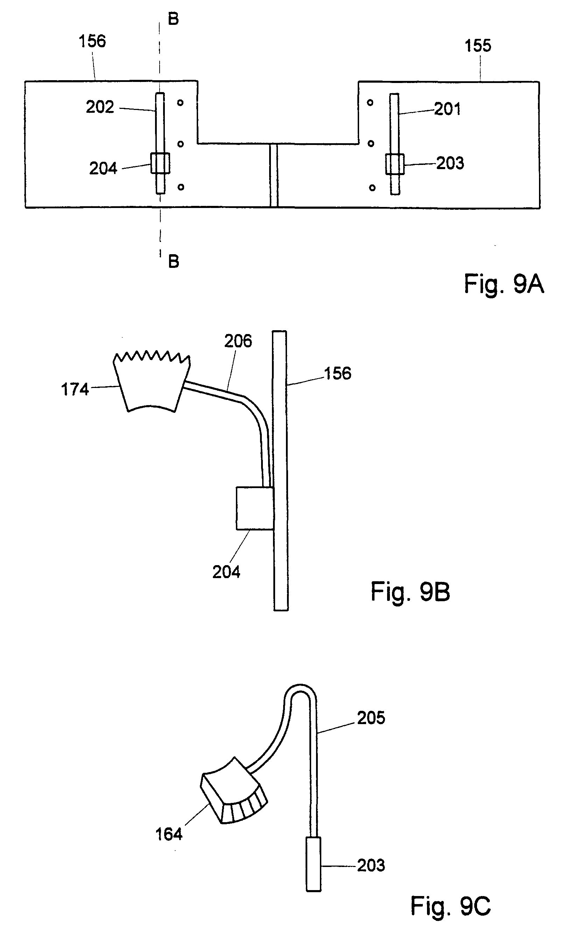

According to an important aspect of the present invention, those measuring means may comprise resistance tracks 201, 202 provided on the printed circuit boards 155, 156, while there are provided respective sliding contacts 203, 204 that can be displaced over those resistance tracks 201, 202, corresponding to the adjustment of the rearview mirror. For optimal precision, and to maximally exclude mutual differences and inhomogeneities in the resistance tracks resulting from the manufacturing process, those resistance tracks 201, 202 are preferably, and as shown in Fig. 9, linear and mutually parallel.

Fig. 9A shows a front view of the printed circuit boards 155, 156, viewed according to the X-direction, where the position of those resistance tracks 201, 202 is outlined, which demonstrates that those resistance tracks 201, 202 in the embodiment discussed are oriented in the Y-direction.

As resistance tracks with sliding contacts are known per se, and it is understood by anyone skilled in the art how such measuring members can be manufactured, this will not be further explained here. It suffices to observe that for providing the generated signals to a control member, connecting wires for those measuring members can be connected, in a manner known per se, to the printed circuit boards and can be lead away via the hollow support 4.

For providing a measuring signal representative of the position relative to the Z-axis, the second sliding contact 204 is coupled to a part whose position relative to the frame support 100 changes during the adjustment about the Z-axis. This can for instance be a part which forms a part of the reduction system 172. In the embodiment shown, the second sliding contact 204 is coupled to the gear segment 174 by means of a flexible member 206 capable of transmitting pulling forces as well as pushing forces, which member, in an embodiment which is preferred because of its simplicity, is formed from plastic thread, for instance fishing line of a thickness of about 0.9 mm. Fig. 9B schematically shows a section according to an XY-plane at the level of the second resistance track 202, which clearly shows the shape of that fishing line 206.

The fishing line 206 can be attached to the gear segment 174 in any suitable manner, for instance through gluing or clamping. Fig. 6D shows that in the second support part 120, a groove 220 has been provided for guiding the fishing line 206 therein. This groove 220 has a vertical portion 221 adjacent the resistance track 202, and changes into a curved portion 222 adjacent the gear segment 174.

Likewise, the first sliding contact 203 is coupled, via a first fishing line 205, to the first gear segment 164 for providing a measuring signal representative of the position relative to the Y-axis. For guiding the first fishing line 205, the first support part 110 is provided with a groove 210, as shown in Fig. 6D. This groove 210 has a vertical portion 211 adjacent the resistance track 201, and changes, via a portion 212 curved in a vertical plane, into a portion 214 curved in a horizontal plane adjacent the gear segment 164. Fig. 9C is a perspective view of the first gear segment 164, the first fishing line 205 and the first sliding contact 203 showing the form of the first fishing line 205.

An advantage of the preferred construction described is that the transmission between displaceable parts and detector is established by a rigid connection without the interposition of a gear transmission system, and hence without gear-induced play. The gear segments 164, 174, the flexible bars 205, 206 and the sliding contacts 202, 204 can even be advantageously manufactured as integrated parts. This has a favorable effect on the accuracy.

In an advantageous embodiment, as illustrated in Fig. 6D, each support part 110, 120 has a groove ending, at one end thereof, in a bend lying in a vertical plane and, at the other end thereof, changes, via a bend segment lying in a vertical plane, into a bend segment lying in a horizontal plane. Thus, it is possible that the two support parts 110, 120 are mutually identical, which support parts, during assembly, are mounted upside down relative to each other, as a result of which the manufacturing costs of the support parts 110, 120 can remain limited.

In a preferred embodiment, the bottom 30 of the frame 20 is to a slight extent flexibly deformable relative to the legs 21, 22 of the frame 20 in such a manner that the spring 40 acting on the bottom 30 and the legs 21, 22 can push away any play between the frame support 100, the coupling members 80, 90, the support 4 and the frame 20. Thus, the spring 40 advantageously performs three functions in one: generating friction between the moving parts to secure stability, eliminating any play between the moving parts, and providing a bias for the dimming construction.

It will be understood by anyone skilled in the art that the protective scope of the present invention as defined by the claims is not limited to the embodiments shown in the drawings and discussed, but that it is possible to change or modify the embodiments shown of the rearview mirror according to the invention within the framework of the inventive concept. For instance, it is possible to dispense with the possibility of rendering the rearview mirror 1 suitable for several types of vehicle, i.e. that the freedom of movement F1 of the support 4 relative to the housing 2 is lacking. In such a case, the support 4 may be fixedly attached to the first coupling member 80 to form a single, integrated part therewith.

It is also possible that the housing 2 is coupled to the frame 20 and that for providing the dimming possibility, the mirror support plate 3' is pivotally attached to the housing 2. Also, the housing 2 and the mirror support plate 3' may be fixedly interconnected, with either the housing 2 or the mirror support plate 3' being coupled to the frame 20, in an embodiment wherein the dimming possibility is dispensed with, or wherein the dimming possibility is provided by electrochrome glass, or wherein the dimming possibility is provided by driving the motor M2 (providing the Z-rotation) in a suitable manner.

It is also possible that the spring (40) engages the support parts (110, 120), rather than the legs (21, 22) of the frame (20) .

## Claims

1. Rearview mirror comprising an adjusting mechanism, the adjusting mechanism comprising:
- a support (4) for attaching the rearview mirror to a vehicle;
- a mirror support plate (3') for attaching a mirror plate (3) thereto;
- a frame (20), to which the mirror support plate (3') is attached;
**characterised in that**
the adjusting mechanism comprises a frame support (100) and coupling means (80, 90) for coupling the support (4) to the frame support (100) in such a manner, that between the coupling means (80, 90) on the one hand and the frame support (100) on the other, only a freedom of rotation about a Y-axis is present, wherein the frame (20) is coupled to the frame support (100) in such a manner that between the frame (20) on the one hand and the frame support (100) on the other, only a freedom of rotation about a Z-axis is present.

2. A rearview mirror according to claim 1, wherein between the coupling means (80, 90) on the one hand and the support (4) on the other, only a freedom of rotation about a Z-axis is present, while securing means (63, 64, 85) are provided for removing said freedom of rotation about the Z-axis after assembly.

3. A rearview mirror according to claim 2, wherein the securing means (63, 64, 85) comprise a suitable profiling of the support (4) and a coupling member (80).

4. A rearview mirror according to claim 2, wherein the support (4) and a coupling member (80) are manufactured as a single, integrated part, wherein the coupling member (80) is provided on the support (4) by means of an injection molding technique, wherein the orientation of the support (4) relative to the coupling member (80) is determined by the orientation of the support (4) in an injection mold during the manufacturing process.

5. A rearview mirror according to claims 1-4, wherein the coupling means (80, 90) comprise a first coupling member (80) and a second coupling member (90), wherein the first coupling member (80) is coupled to the support (4) and wherein the second coupling member (90) is coupled to the frame support (100), and wherein the first coupling member (80) and the second coupling member (90) are coupled to each other in such a manner that between the first coupling member (80) on the one hand and the second coupling member (90) on the other, only a freedom of rotation about an X-axis is present.

6. A rearview mirror according to any one of the preceding claims, wherein the support (4) has a spherical end (62) provided with two projecting pins (63, 64) that are in line.

7. A rearview mirror according to any one of the preceding claims, wherein the first coupling member (80) has a top face (81) curved according to a circular cylinder face and has its bottom side provided with suitable profilings (85) for coupling to the support (4).

8. A rearview mirror according to any one of the preceding claims, wherein the second coupling member (90) has a bottom face (91) curved according to a cylinder face for coupling to the first coupling member (80), and wherein the second coupling member (90) has its sidewall provided with side faces (95, 96) curved according to a cylinder face and a shoulder portion (97, 98) for coupling to the frame support (100).

9. A rearview mirror according to any one of the preceding claims, wherein the frame (20) comprises a bottom (30) with a hinge socket (65) for coupling to the support (4), and vertical legs (21, 22) provided with end faces (112, 113; 122, 123) curved according to a cylinder face, for coupling to the frame support (100) .

10. A rearview mirror according to any one of the preceding claims, wherein the frame support (100) comprises two support parts (110, 120), wherein the support parts (110; 120) are provided with wall portions (133; 134) curved according to a cylinder face, for coupling to the second coupling member (90), and wherein the support parts (110; 120) are provided with wall portions (114, 115; 124, 125) curved according to a cylinder face, for coupling to the frame (20).

11. A rearview mirror according to any one of the preceding claims, wherein a spring (40) is present exerting an upwardly directed force on the bottom (30) of the frame (20) and a downwardly directed force on the legs (21, 22) of the frame (20) respectively on the support parts (110, 120).

12. A rearview mirror according to any one of the preceding claims, wherein the mirror support plate (3') is pivotally attached to the frame (20), and wherein a dimming lever (9) is coupled between the frame (20) and the mirror support plate (3'), for providing a dimming possibility.

13. A rearview mirror according to claim 12, wherein the dimming lever (9) is pressed by the spring (40) against the bottom (30) of the frame (20), and the dimming lever (9) can pivot relative to the spring (40).

14. A rearview mirror according to any one of the preceding claims, wherein a first gear segment (164) is connected to the second coupling member (90), and wherein a first electromotor (M1) is provided that is arranged in a first motor housing part (151) mounted on the frame support (100), said first electromotor (M1) driving a gear wheel (161) which is in engagement with said first gear segment (164).

15. A rearview mirror according to any one of the preceding claims, wherein a second gear segment (174) is connected to the second leg (22) of the frame (20), and wherein a second electromotor (M2) is provided that is arranged in a second motor housing part (152) mounted on the frame support (100), said second electromotor (M2) driving a gear wheel (171) which is in engagement with said second gear segment (174).

16. A rearview mirror according to claims 14 and 15, wherein the axes of rotation of said gear wheels (161, 171) make an angle of 45° with the Y-axis.

17. A rearview mirror according to claim 14, 15 or 16, wherein said gear wheels (161, 171) are pinions, and wherein said gear segments (164, 174) are designed as crown wheels.

18. A rearview mirror according to one of claims 14-17, wherein the motors (M1, M2) comprise connecting pins (154) projecting outwards through said housing parts (151, 152), wherein printed circuit boards (155, 156) are provided which, for connection, contact said connecting pins (154).

19. A rearview mirror according to claim 18, wherein said printed circuit boards (151, 152) are manufactured as one whole.

20. A rearview mirror according to any one of the preceding claims, wherein detectors (201, 203; 202, 204) are provided adapted to generate an electric signal representative of the position of the mirror support plate (3') relative to the Y-axis and relative to the Z-axis.

21. A rearview mirror according to claim 20, wherein each detector (201, 203; 202, 204) comprises a resistance track (201; 202) provided on a printed circuit board (155; 156).

22. A rearview mirror according to claim 21, wherein the resistance tracks (201; 202) are directed parallel relative to each other.

23. A rearview mirror according to claim 21 or 22, wherein each detector (201, 203; 202, 204) comprises a sliding contact (203; 204) displaceable along a respective resistance track (201; 202).

24. A rearview mirror according to claim 23, wherein each sliding contact (203; 204) is coupled to a respective one of said gear segments (164; 174).

25. A rearview mirror according to claim 24, wherein the coupling between a sliding contact (203; 204) and a gear segment (164; 174) is established by a flexible, pliable plastic bar (205; 206) .

26. A rearview mirror according to claim 25, wherein each of said plastic bars (205; 206) is guided in a respective one of grooves (210; 220) provided in the frame support (100).

27. An adjusting mechanism for a rearview mirror according to any of the preceding claims, comprising:
- a support (4) for attaching the rearview mirror to a vehicle;
- a mirror support plate (3') for attaching a mirror plate (3) thereto;
- a frame (20), to which the mirror support plate (3') is attached;
the adjusting mechanism comprising a frame support (100) and coupling means (80, 90) for coupling the support (4) to the frame support (100) in such a manner, that between the coupling means (80, 90) on the one hand and the frame support (100) on the other, only a freedom of rotation about a Y-axis is present, wherein the frame (20) is coupled to the frame support (100) in such a manner that between the frame (20) on the one hand and the frame support (100) on the other, only a freedom of rotation about a Z-axis is present.

28. A vehicle comprising a rearview mirror according to any of claims 1-26.

## Patentansprüche

1. Rückspiegel, der einen Einstellmechanismus aufweist, wobei der Einstellmechanismus folgendes aufweist:
- einen Träger (4) für das Anbringen des Rückspiegels an einem Fahrzeug;
- eine Spiegelträgerplatte (3') für das Anbringen einer Spiegelplatte (3) daran;
- einen Rahmen (20), an welchem die Spiegelträgerplatte (3') angebracht ist;
**dadurch gekennzeichnet, dass**
der Einstellmechanismus einen Rahmenträger (100) und Kupplungs- bzw. Kopplungsmittel (80, 90) für das Koppeln des Trägers (4) an den Rahmenträger (100) aufweist, und zwar auf eine solche Weise, dass zwischen den Kopplungsmitteln (80, 90) auf der einen Seite und dem Rahmenträger (100) andererseits nur eine Drehfreiheit um eine Y-Achse vorliegt, wobei der Rahmen (20) an den Rahmenträger (100) auf eine solche Weise gekoppelt ist, dass zwischen dem Rahmen (20) einerseits und dem Rahmenträger (100) andererseits nur eine Drehfreiheit um eine Z-Achse vorliegt.

2. Rückspiegel gemäß Anspruch 1, wobei zwischen den Kopplungsmitteln (80, 90) einerseits und dem Träger (4) andererseits nur eine Drehfreiheit um eine Z-Achse vorliegt, während Sicherungsmittel (63, 64, 85) vorgesehen sind für das Entfernen bzw. Wegnehmen der Drehfreiheit um die Z-Achse nach dem Zusammenbau.

3. Rückspiegel gemäß Anspruch 2, wobei die Sicherungsmittel (63, 64, 85) eine geeignete Profilierung des Trägers (4) und ein Kopplungsglied (80) aufweisen.

4. Rückspiegel gemäß Anspruch 2, wobei der Träger (4) und ein Kopplungsglied (80) aus einem einzigen, integralen Teil hergestellt werden, wobei das Kopplungsglied (80) auf dem Träger (4) mittels einer Einspritzformtechnik vorgesehen wird, wobei die Orientierung des Trägers (4) relativ zum Kopplungsglied (80) bestimmt wird durch die Orientierung des Trägers (4) in einer Einspritzform während des Herstellungsprozesses.

5. Rückspiegel gemäß einem der Ansprüche 1 bis 4, wobei die Kopplungsmittel (80, 90) ein erstes Kopplungsglied (80) und ein zweites Kopplungsglied (90) aufweisen, wobei das erste Kopplungsglied (80) an den Träger (4) gekoppelt ist und wobei das zweite Kopplungsglied (90) an den Rahmenträger (100) gekoppelt ist, und wobei das erste Kopplungsglied (80) und das zweite Kopplungsglied (90) aneinander gekoppelt sind auf eine solche Weise, dass zwischen dem ersten Kopplungsglied (80) einerseits und dem zweiten Kopplungsglied (90) andererseits nur eine Drehfreiheit um eine X-Achse vorliegt.

6. Rückspiegel gemäß einem der vorhergehenden Ansprüche, wobei der Träger (4) ein sphärisches Ende (62) besitzt, dass mit zwei vorragenden Stiften (63, 64) versehen ist, die sich in einer Linie befinden.

7. Rückspiegel gemäß einem der vorhergehenden Ansprüche, wobei das erste Kopplungsglied (80) eine Oberseite (81) besitzt, die gemäß einer kreisförmigen Zylinderseite gekrümmt ist, und eine Unterseite besitzt, die mit geeigneten Profilierungen (85) für ein Koppeln mit dem Träger (4) versehen ist.

8. Rückspiegel gemäß einem der vorhergehenden Ansprüche, wobei das zweite Kopplungsglied (90) eine Unterseite (91) besitzt, die gemäß einer Zylinderseite für das Koppeln mit dem ersten Kopplungsglied (80) gekrümmt ist, und wobei das zweite Kopplungsglied (90) eine Seitenwand besitzt, die mit seitlichen Seiten (95, 96) versehen ist, die gemäß einer Zylinderseite bzw. Zylinderoberfläche gekrümmt sind, und mit einem Schulterteil (97, 98) für das Koppeln an den Rahmenträger (100).

9. Rückspiegel gemäß einem der vorhergehenden Ansprüche, wobei der Rahmen (20) einen Boden bzw. ein Unterteil (30) aufweist mit einer Angelbuchse (65) für das Koppeln an den Träger (4), und vertikale Beine (21, 22), die mit Endseiten (112, 113; 122, 123) versehen sind, die gemäß einer Zylinderseite gekrümmt sind, und zwar für das Koppeln mit dem Rahmenträger (100).

10. Rückspiegel gemäß einem der vorhergehenden Ansprüche, wobei der Rahmenträger (100) zwei Trägerteile (110, 120) aufweist, wobei die Trägerteile (110; 120) versehen sind mit Wandteilen (133; 134), die gemäß einer Zylinderseite gekrümmt sind, und zwar für das Koppeln an das zweite Kopplungsglied (90), und wobei die Trägerteile (110; 120) versehen sind mit Wandteilen (114, 115; 124, 125), die gemäß einer Zylinderseite gekrümmt sind, und zwar für das Koppeln mit dem Rahmen (20).

11. Rückspiegel gemäß einem der vorhergehenden Ansprüche, wobei eine Feder (40) vorliegt, die eine nach oben gerichtete Kraft auf den Unterteil bzw. den Boden (30) des Rahmens (20) ausübt, und eine nach unten gerichtete Kraft auf die Beine (21, 22) des Rahmens (20) auf den jeweiligen Trägerteilen (110, 120).

12. Rückspiegel gemäß einem der vorhergehenden Ansprüche, wobei die Spiegelträgerplatte (3') schwenkbar am Rahmen (20) angebracht ist, und wobei ein Dämpfungshebel (9) zwischen dem Rahmen (20) und der Spiegelträgerplatte (3') gekoppelt ist zum Vorsehen einer Dämpfungs- bzw. Beleuchtungsriegelungsmöglichkeit.

13. Rückspiegel gemäß Anspruch 12, wobei der Dämpfungshebel (9) durch die Feder (40) gegen den Boden (30) des Rahmens (20) gedrückt wird und wobei der Dämpfungshebel (9) relativ zur Feder (40) schwenken kann.

14. Rückspiegel gemäß einem der vorhergehenden Ansprüche, wobei ein erstes Zahnsegment (164) verbunden ist mit dem zweiten Kopplungsglied (90), und wobei ein erster Elektromotor (M1) vorgesehen ist, der in einem ersten Motorgehäuseteil (151) angeordnet ist, das auf dem Rahmenträger (100) montiert ist, wobei der erste Elektromotor (M1) ein Zahnrad (161) antreibt, das in Eingriff ist mit dem ersten Zahnsegment (164).

15. Rückspiegel gemäß einem der vorgehenden Ansprüche, wobei ein zweites Zahnsegment (174) mit dem zweiten Bein (22) des Rahmens (20) verbunden ist, und wobei ein zweiter Elektromotor (M2) vorgesehen ist, der in einem zweiten Motorgehäuseteil (152) angeordnet ist, das am Rahmenträger (100) montiert ist, wobei der zweite Elektromotor (M2) ein Zahnrad (171) antreibt, das in Eingriff ist mit dem zweiten Zahnsegment (174).

16. Rückspiegel gemäß einem der Ansprüche 14 und 15, wobei die Drehachsen der Zahnräder (161, 171) einen Winkel von 45° mit der Y-Achse einschließen.

17. Rückspiegel gemäß Anspruch 14, 15 oder 16, wobei die Zahnräder (161, 171) Ritzel sind und wobei die Zahnsegmente (164, 174) als Antriebskegelräder bzw. Kronenräder konstruiert sind.

18. Rückspiegel gemäß einem der Ansprüche 14 bis 17, wobei die Motoren (M1, M2) Verbindungsstifte (154) aufweisen, die nach außen durch die Gehäuseteile (151, 152) herausragen, wobei gedruckte Leiterplatten (155, 156) vorgesehen sind, die für eine Verbindung die Verbindungsstifte (154) kontaktieren.

19. Rückspiegel gemäß Anspruch 18, wobei die gedruckten Leiterplatten (151, 152) als ein Ganzes hergestellt werden.

20. Rückspiegel gemäß einem der vorhergehenden Ansprüche, wobei Detektoren (201, 203; 202, 204) vorgesehen sind, die zum Erzeugen eines elektrischen Signals angepasst sind, das repräsentativ ist für die Position der Spiegelträgerplatte (3') relativ zur Y-Achse und relativ zur Z-Achse.

21. Rückspiegel gemäß Anspruch 20, wobei jeder Detektor (201, 203; 202, 204) eine Widerstandsschiene (201, 202) aufweist, die auf einer gedruckten Leiterplatte (155; 156) vorgesehen ist.

22. Rückspiegel gemäß Anspruch 21, wobei die Widerstandsschienen (201, 202) parallel relativ zueinander gerichtet sind.

23. Rückspiegel gemäß Anspruch 21 oder 22, wobei jeder Detektor (201, 203; 202, 204) einen Schleifkontakt (203; 204) aufweist, der entlang einer jeweiligen Widerstandsschiene (201; 202) verschiebbar ist.

24. Rückspiegel gemäß Anspruch 23, wobei der Schleifkontakt (203; 204) an ein jeweiliges der Zahnsegmente (164; 174) gekoppelt ist.

25. Rückspiegel gemäß Anspruch 24, wobei die Kopplung zwischen einem Schleifkontakt (203; 204) und einem Zahnsegment (164; 174) erstellt wird durch eine flexible, biegsame Plastikstange (205; 206).

26. Rückspiegel gemäß Anspruch 25, wobei eine jede der Plastikstangen (205; 206) geführt wird in einer jeweiligen Nut (210; 220), die im Rahmenträger (100) vorgesehen sind.

27. Einstellmechanismus für einen Rückspiegel gemäß einem der vorhergehenden Ansprüche, der folgendes aufweist:
- einen Träger (4) für das Anbringen des Rückspiegels an einem Fahrzeug;
- eine Spiegelträgerplatte (3') für das Anbringen einer Spiegelplatte (3) darauf;
- einen Rahmen (20), an welchem die Spiegelträgerplatte (3') angebracht ist;
wobei der Einstellmechanismus einen Rahmenträger (100) und Kopplungsmittel (80, 90) für das Koppeln des Trägers (4) an den Rahmenträger (100) aufweist, und zwar auf eine solche Weise, dass zwischen den Kopplungsmitteln (80, 90) einerseits und dem Rahmenträger (100) andererseits nur eine Drehfreiheit um eine Y-Achse vorliegt, wobei der Rahmen (20) an den Rahmenträger (100) auf eine solche Weise gekoppelt ist, dass zwischen dem Rahmen (20) einerseits und dem Rahmenträger (100) andererseits nur eine Drehfreiheit um eine Z-Achse vorliegt.

28. Fahrzeug, das einem Rückspiegel gemäß einem der Ansprüche 1-26 aufweist.

## Revendications

1. Rétroviseur comprenant un mécanisme de réglage, le mécanisme de réglage comprenant :
- un support (4) destiné à attacher le rétroviseur à un véhicule
- une plaque support de miroir (3') servant à y attacher une plaque de miroir (3)
- un cadre (20) auquel la plaque support de miroir (3') est attachée ;
**caractérisé en ce que**
le mécanisme de réglage comprend un support de cadre (100) et des moyens d'accouplement (80, 90) destinés à accoupler le support (4) au support de cadre (100) de telle manière qu'entre les moyens d'accouplement (80, 90), d'une part, et le support de cadre (100), de l'autre, il y ait seulement une liberté de rotation autour d'un axe Y, le cadre (20) étant accouplé au support de cadre (100) de telle manière qu'entre le cadre (20), d'une part, et le support de cadre (100), de l'autre, il y ait seulement une liberté de rotation autour d'un axe Z.

2. Rétroviseur selon la revendication 1, dans lequel entre les moyens d'accouplement (80, 90), d'une part, et le support (4), de l'autre, il y ait seulement une liberté de rotation autour d'un axe Z, cependant que des moyens de blocage (63, 64, 85) sont prévus pour supprimer ladite liberté de rotation autour de l'axe Z après l'assemblage.

3. Rétroviseur selon la revendication 2, dans lequel les moyens de blocage (63, 64, 85) comprennent un profil approprié du support (4) et d'un élément d'accouplement (80).

4. Rétroviseur selon la revendication 2, dans lequel le support (4) et un élément d'accouplement (80) sont fabriqués sous la forme d'une pièce unique, intégrée, l'élément d'accouplement (80) étant prévu sur le support (4) par une technique de moulage par injection, l'orientation du support (4) par rapport à l'élément d'accouplement (80) étant déterminée par l'orientation du support (4) dans un moule d'injection pendant le processus de fabrication.

5. Rétroviseur selon les revendications 1-4, dans lequel les moyens d'accouplement (80, 90) comprennent un premier élément d'accouplement (80) et un deuxième élément d'accouplement (90), le premier élément d'accouplement (80) étant accouplé au support (4) et le deuxième élément d'accouplement (90) étant accouplé au support de cadre (100), et le premier élément d'accouplement (80) et le deuxième élément d'accouplement (90) étant accouplés l'un à l'autre de telle manière qu'entre le premier élément d'accouplement (80), d'une part, et le deuxième élément d'accouplement (90) de l'autre, il y ait seulement une liberté de rotation autour d'un axe X.

6. Rétroviseur selon l'une quelconque des revendications précédentes, dans lequel le support (4) possède une extrémité sphérique (62) munie de deux tenons saillants (63, 64) qui sont en ligne.

7. Rétroviseur selon l'une quelconque des revendications précédentes, dans lequel
le premier élément d'accouplement (80) possède une face supérieure (81) courbe en forme de face de cylindre circulaire et a son côté inférieur muni de profils appropriés (85) pour l'accouplement au support (4).

8. Rétroviseur selon l'une quelconque des revendications précédentes, dans lequel
le deuxième élément d'accouplement (90) a une face inférieure (91) courbe en forme de face de cylindre pour l'accouplement au premier élément d'accouplement (80), et dans lequel le deuxième élément d'accouplement (90) a sa paroi latérale munie de faces latérales (95, 96) courbes en forme de face de cylindre et une partie d'épaulement (97, 98) pour l'accouplement au support de cadre (100).

9. Rétroviseur selon l'une quelconque des revendications précédentes, dans lequel le cadre (20) comprend une partie inférieure (30) munie d'une cuvette d'articulation (65) pour l'accouplement au support (4), et des branches verticales (21, 22) munies de faces terminales (112, 113 ; 122, 123) courbes en forme de face de cylindre, pour l'accouplement au support de cadre (100);

10. Rétroviseur selon l'une quelconque des revendications précédentes, dans lequel le support de cadre (100) comprend deux parties de support (110, 120), les parties de support (110; 120) étant munies de partie de paroi (133; 134) courbes en forme de face de cylindre, pour l'accouplement au deuxième élément d'accouplement (90) et les parties de support (110, 120) étant munies de parties de paroi (114, 115; 124, 125) courbes en forme de face de cylindre, pour l'accouplement au cadre (20).

11. Rétroviseur selon l'une quelconque des revendications précédentes, dans lequel il est prévu un ressort (40) qui exerce une force dirigée vers le haut sur la partie inférieure (30) du cadre (20) et une force dirigée vers le bas sur les branches (21, 22) du cadre (20) respectivement sur les parties de support (110, 120).

12. Rétroviseur selon l'une quelconque des revendications précédentes, dans lequel la plaque support de miroir (3') est attachée de façon pivotante au cadre (20), et dans lequel un levier de position anti-éblouissement (9) est accouplé entre le cadre (20) et la plaque support de miroir (3') pour donner une possibilité de position anti-éblouissement.

13. Rétroviseur selon la revendication 12, dans lequel le levier de position anti-éblouissement (9) est pressé par le ressort (40) contre la partie inférieure (30) du cadre (20) et le levier de position anti-éblouissement (9) peut pivoter par rapport au ressort (40).

14. Rétroviseur selon l'une quelconque des revendications précédentes, dans lequel un premier segment d'engrenage (164) est relié au deuxième élément d'accouplement (90) et dans lequel il est prévu un premier moteur électrique (M1) qui est arrangé dans une première partie de boîtier de moteur (151) montée sur le support de cadre (100), ledit premier moteur électrique (M1) entraînant une roue d'engrenage (161) qui est en prise avec ledit premier segment d'engrenage (164).

15. Rétroviseur selon l'une quelconque des revendications précédentes, dans lequel un deuxième segment d'engrenage (174) est relié à la deuxième branche (22) du cadre (20), et dans lequel il est prévu un deuxième moteur électrique (M2) qui est arrangé dans une deuxième partie de boîtier de moteur (152) montée sur le support de cadre (100), le deuxième moteur électrique (M2) entraînant une roue d'engrenage (171) qui est en prise avec ledit deuxième segment d'engrenage (174).

16. Rétroviseur selon les revendications 14 et 15, dans lequel les axes de rotation desdites roues d'engrenage (161, 171) forment un angle de 45 ° avec l'axe Y.

17. Rétroviseur selon les revendications 14, 15 ou 16 dans lequel lesdites roues d'engrenage (161, 171) sont des pignons et lesdits segments d'engrenage (164, 174) sont réalisés sous la forme de couronnes.

18. Rétroviseur selon l'une des revendications 14-17, dans lequel les moteurs (M1, M2) comprennent des broches de connexion (154) qui font saillie vers l'extérieur à travers lesdites parties de boîtier (151, 152), cependant qu'il est prévu des cartes de circuit imprimé (155, 156) qui, pour la connexion, entrent en contact avec lesdites broches de contact (154).

19. Rétroviseur selon la revendication 18, dans lequel lesdites cartes de circuit imprimé (151, 152) sont fabriquées comme une seule pièce.

20. Rétroviseur selon l'une quelconque des revendications précédentes, dans lequel il est prévu des détecteurs (201, 203 ; 202, 204) adaptés pour engendrer un signal électrique représentatif de la position de la plaque support de miroir (3') par rapport à l'axe Y et par rapport à l'axe Z.

21. Rétroviseur selon la revendication 20, dans lequel chaque détecteur (201, 203 ; 202, 204) comprend une piste résistante (201 ; 202) prévue sur une carte de circuit imprimé (155 ; 156).

22. Rétroviseur selon la revendication 21, dans lequel les pistes résistantes (201 ; 202) sont dirigées parallèlement entre elles.

23. Rétroviseur selon la revendication 21 ou 22, dans lequel chaque détecteur (201, 203 ; 202, 204) comprend un contact glissant (203 ; 204) pouvant se déplacer le long d'une piste résistante respective (201 ; 202).

24. Rétroviseur selon la revendication 23, dans lequel chaque contact glissant (203 ; 204) est accouplé à l'un, respectif, desdits segments d'engrenage (164 ; 174).

25. Rétroviseur selon la revendication 24, dans lequel l'accouplement entre un contact glissant (203 ; 204) et un segment d'engrenage (164 ; 174) est établi par une barre de matière plastique flexible, souple (205 ; 206).

26. Rétroviseur selon la revendication 25, dans lequel chacune desdites barres en matière plastique (205 ; 206) est guidée dans une des rainures respectives (210 ; 220) prévues dans le support de cadre (100).

27. Mécanisme de réglage pour un rétroviseur selon l'une des revendications précédentes, comprenant :
- un support (4) destiné à attacher le rétroviseur à un véhicule
- une plaque support de miroir (3') servant à y attacher une plaque de miroir (3)
- un cadre (20) auquel la plaque support de miroir (3') est attachée ;
le mécanisme de réglage comprenant un support de cadre (100) et des moyens
d'accouplement (80, 90) destinés à accoupler le support (4) au support de cadre (100) de telle manière qu'entre les moyens d'accouplement (80, 90), d'une part, et le support de cadre (100), de l'autre, il y ait seulement une liberté de rotation autour d'un axe Y, le cadre (20) étant accouplé au support de cadre (100) de telle manière qu'entre le cadre (20), d'une part, et le support de cadre (100), de l'autre, il y ait seulement une liberté de rotation autour d'un axe Z.

28. Véhicule comprenant un rétroviseur selon l'une quelconque des revendications 1-26.
